Europäisches Patentamt

(19) European Patent Office

Office européen des brevets

(11) Publication number: **0 081 279**
A1

(12) # EUROPEAN PATENT APPLICATION

(21) Application number: 82304199.1

(22) Date of filing: 09.08.82

(51) Int. Cl.³: **B 65 D 85/72**
B 65 D 25/18, B 65 D 6/10

(30) Priority: 10.08.81 US 291165

(43) Date of publication of application:
15.06.83 Bulletin 83/24

(84) Designated Contracting States:
AT CH DE FR GB LI NL SE

(71) Applicant: ALADDIN INDUSTRIES, INCORPORATED
703 Murfreesboro Road
Nashville Tennessee 37210(US)

(72) Inventor: Bridges, John A.
300 Rural Hill Ct.
Nashville Tennessee(US)

(74) Representative: George, Roger David et al,
Raworth, Moss & Cook 36 Sydenham Road
Croydon Surrey CR0 2EF(GB)

(54) Plastic food container of double wall construction.

(57) The plastic container (10) includes first and second spaced-apart walls (12, 14) connected along the periphery (16) of the container to define an enclosed compartment (18). A plurality of reinforcing posts (26) are integrally formed from the walls during the molding of the container to rigidly connect the first wall to the second wall. Foam insulation (19) disposed in the compartment (18) contributes to the strength of the container and improves the thermal insulation properties thereof.

FIG. 4

EP 0 081 279 A1

TITLE MODIFIED
see front page

AN IMPROVED PLASTIC FOOD CONTAINER
OF DOUBLE WALL CONSTRUCTION

Background of the Invention

This invention relates generally to molded plastic food containers such as plates, bowls, cups and the like.

Molding plastic materials to form plates, bowls, cups and similar articles for holding goods or liquids is, of course, well known. It is equally well known to mold similar materials for such purposes to be relatively thick to provide strength to permit them to be self-supporting even when holding a material of some weight and in many instances to provide thermal insulation. Thus, it is known to mold such articles as solid devices or to mold them in separate pieces which are joined to form a hollow structure and may or may not be filled with an insulating material.

Heretofore, to applicant's knowledge, plastic food containers having some degree of physical strength have been formed using injection or vacuum molding techniques in order to obtain the thickness necessary to provide the desired strength. For instance, where a reusable cup, dish or the like is desired, advantageous qualities include sufficient strength (rigidity) to be self-supporting and to support the weight of the food or drink placed on or in the article. Very frequently, these objectives

-2-

are achieved by molding a relatively thick structure but, as is obvious, this requires use of larger amounts of material which makes such articles costly to manufacture. Strength, as well as thermal insulation, is sometimes provided by forming a hollow structure and foaming an insulating material therein. The hollow foam filled structures, to applicant's knowledge, are formed by vacuum molding or injection molding two separate pieces and joining them along their mating edges.

It is an object of this invention to provide a novel plastic article of double wall construction formed as a unitary structure having sufficient physical strength to be self-supporting and filled with an insulating material.

A further object of this invention is to provide a novel unitary plastic structure using smaller amounts of material yet having the strength of conventional structures having similar dimensions which utilize larger amounts of material.

## Brief Description of the Invention

The foregoing and other objects of the invention are achieved by providing a unitary plastic structure having double wall construction with integral posts or braces extending between the two walls to maintain a desired distance between the walls. This space between the walls is filled with a material for the purpose of providing thermal insulation and strength.

## Brief Description of the Drawings

The invention itself is set forth in the claims appended hereto and forming a part of this specification while an understanding of the embodiment thereof may be had by reference to the detailed description taken in conjunction with the drawings in which:

Figure 1 is a perspective view of an article such as a dish or bowl formed in accordance with the invention;

Figure 2 is a side view of the article of Figure 1;

Figure 3 is a top view of the article of Figure 1;

Figure 4 is a cross-sectional view taken along the lines 4-4 of Figure 3;

Figure 5 is a partial bottom view of the article of Figure 1;

Figure 6 is a perspective vie of another embodiment of the present invention wherein an article is formed, such as a plate; and

Figure 7 is a perspective view of still another embodiment of the invention where the article is formed, such as a cup.

## Detailed Description

A molded plastic food or beverage container in accordance with this invention can be formed in a wide variety of shapes and sizes depending upon the needs of a potential user and the choices of the designer. The particular embodiments of the present
invention described and illustrated herein are
exemplary of some of these various shapes.

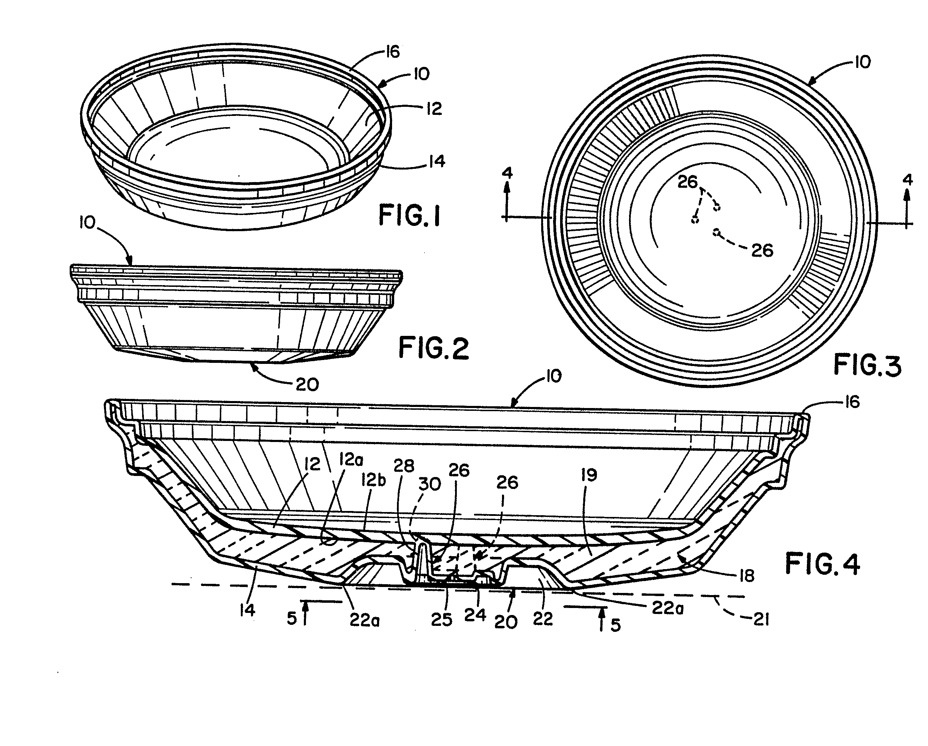

In Figures 1-6, a molded plastic dish or bowl
10 of the double-walled construction type includes an
inside wall 12 and an outside wall 14 which are
joined to form a lip 16 about the periphery of the
bowl to provide an enclosed space 18. Because of the
foam insulation 19 in the dead air space provided by
the double-wall construction an article according to
the invention such as bowl 10 has advantageous
thermal insulating properties.

A base 20 formed from wall 14 enables the bowl
to maintain a stable position when seated upon a
planar surface 21. The base includes an annular recess 22 which defines a central island section 24.
At least one, and preferably a plurality, of reinforcing posts 26 are integrally formed from the central
island portion of wall 14. Although these posts can
be formed in a variety of tubular configurations, the
posts preferably have a frusto-conical shape and are
defined by a continuous tubular wall 28 and an end 30
which is contiguous to wall 12 and terminates between
this wall's inner surface 12a and outer surface 12b.
As seen in Figure 4 the contour of outer surface 12b
adjacent end 30 is not altered, i.e., it is smooth
and continuous. It is desirable to have a smooth food
receiving surface to prevent food from being trapped.

It is an important concept of the present
invention that these posts be formed from the walls
of the container during the molding of the latter.
The container and posts are simultaneously molded from a single length of tubular plastic so that the end 30 of the post is integrally molded with the opposing wall 12. This not only joins the end 30 to wall 12 but also seals the outer portion of tubular wall 28 adjacent end 30 to the inner surface 12a thereby providing a secure connection with wall 12. The posts thus form spaced tubular reinforcing stakes or braces between the two walls without allowing access to the enclosed space in the compartment.

Such a container can be formed by extruding a length of tubular plastic as is known in the art and captivating same between a pair of molds, commonly called "blow molding." A first mold forms wall 12 from approximately one-half of the tubular plastic while a second mold simultaneously forms wall 14 from the other half of the tubular plastic. At least one of the molds will contain an orifice which is used to inject pressurized air into the space 18 via aperture 25 in wall 14 to prevent the two walls from collapsing or coming in contact before the plastic has sufficiently hardened. The posts 26 are formed during the molding process by disposing frusto-conical shaped pins on the second mold extending generally perpendicular to the wall 12 which is being formed. As the first and second mold converge, the tubular length of plastic is forced to conform to the surface contours of the molds and thus the posts are formed simultaneously with the formation of wall 14. The pins, which form the posts, are dimensioned such that ends 30 of the posts project slightly into wall 12 to form an integral joint with that wall once the molten plastic solidifies. When the plastic has cooled sufficiently, the molds are separated and the container is removed. Insulation 19 is injected via aperture 25 into compartment 18 to substantially fill same. Such insulation is injected in a liquid or foam state which then solidifies.

The posts allow a container of double-wall construction to be formed to have sufficient strength to be self-supporting while allowing smaller quantities of plastic material to be utilized than for conventional structures of similar dimensions. The two walls are maintained at a constant spacing, thus resisting to a great degree a force exerted perpendicular to one of the walls tending to deform them.

Another advantage provided by the posts, especially when three or more posts are provided in a geometric relationship such as shown in Figure 3, is that these posts reinforce the planar relationship of wall 12 relative to wall 14 to resist lateral movement. Thus, it will be apparent that the posts provide generally increased rigidity and stability for the container. Although container 10 is illustrated as utilizing three posts in the base, it will be apparent to those skilled in the art that different numbers of posts could be employed in the base as well as at other locations throughout the container.

It is also desirable that container 10 have substantial thermal insulating properties so as to maintain the food placed therein at a palatable temperature for substantial periods of time. The outer lip 22a of the annular recess 22 is dimensioned to provide a collar upon which wall 14 rests. Thus, the central island portion 24 which includes posts 26 is sealed between the collar and the planar surface 21 upon which the latter rests. This prevents any airflow past the posts thereby reducing heat losses due to convection currents. Heat losses by conduction are minimized by the hollow, as opposed to solid, construction of the posts and by recessing the island section 24 so that it does not contact the supporting surface 21.

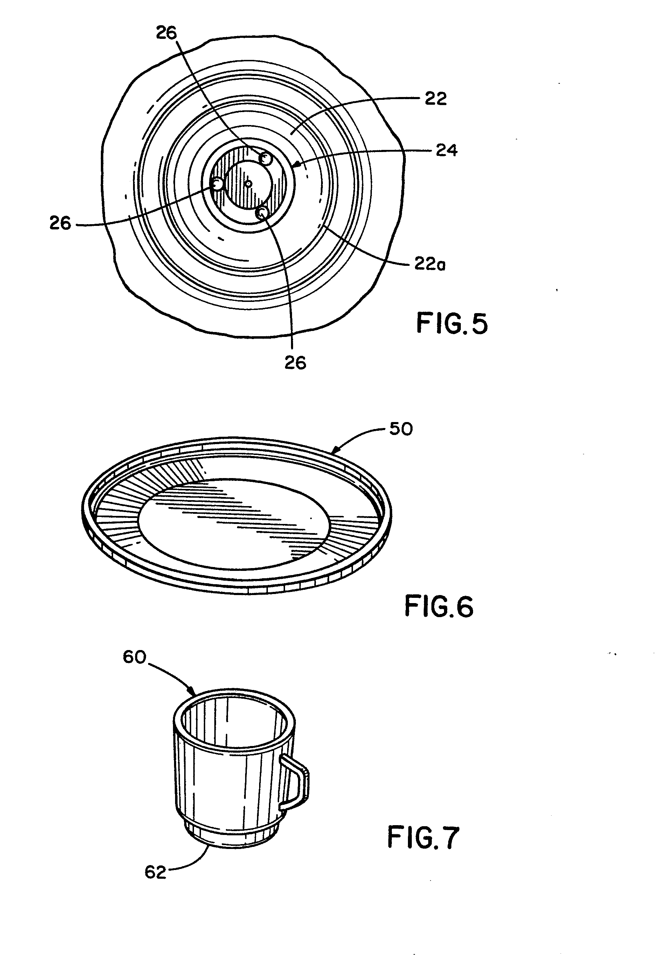

Figure 6 illustrates another embodiment of the present invention in which a plate 50 of the double-wall construction type has been formed. Insulation may be disposed between the two walls to provide for reduced heat losses similar to that described with respect to bowl 10 in Figure 4. Because of the generally planar dimension of plate 50, a plurality of dispersed posts connecting the two walls may be advantageously employed to provide greater strength over the entire planar extent of the plate.

Figure 7 illustrates still another embodiment of the present invention comprising a cup 60 of double-wall construction. The base 62 of the cup includes reinforcing posts which connect the inner and outer walls at the bottom of the cup to provide increased rigidity and strength. The cup may be provided with an insulation material similar to that described with respect to Figure 4 to further reduce heat losses.

The present invention as exemplified by the preceding embodiments provides an integral plastic container of double-wall construction which has sufficient physical strength to be self-supporting and increased rigidity when compared with conventional structures having similar dimensions. The reinforcing posts are economically formed as an integral part of one of the walls of the container, thereby providing a single step. The foam insulation filling the container provides improved insulating properties and contributes to the strength of the container.

CLAIMS:

1. In a molded plastic food or beverage container of double wall construction comprising:

   (a) first and second integrally formed spaced-apart walls generally complementary to each other which define an enclosed compartment;

   (b) a plurality of reinforcing posts connecting said first wall to said second wall, each of said reinforcing posts integrally formed with said walls during the molding of said container; and

   (c) an insulation material substantially filling said compartment.

2. The apparatus according to claim 1 wherein said reinforcing posts each comprise a continuous tubular wall substantially perpendicular to the wall from which it was formed, and an end integrally joined to the opposing wall.

3. The apparatus according to claim 1 or 2 wherein said posts have a generally circular cross-sectional configuration.

4. The apparatus according to claim 1 or 2 wherein each post is of a frusto-conical configuration having a larger cross-sectional dimension adjacent the wall from which the post was formed than at the opposing wall.

5. The apparatus according to claim 2 wherein said end terminates between the inner surface of the opposing wall and the outer surface thereof, said tubular wall adjacent said end being continuously molded to said opposing wall along said inner surface.

6. The apparatus according to claim 2 wherein the wall, from which said posts are formed, comprises the outside wall of the article.

7. The apparatus according to claim 6 wherein said outside wall includes a base portion for supporting the article upon a planar surface.

8. The apparatus according to claim 7 wherein at least one post is formed with the base portion of said outside wall.

9. The apparatus according to claim 8 further comprising a means integral with said base portion for prohibiting air from communicating with said base portion when the latter is seated upon a planar surface wherein heat losses are reduced.

10. The apparatus according to claim 8 wherein said base portion includes a recessed portion on which said posts are formed, said recessed portion disposed so as to not contact a planar surface when the base portion is seated thereon, wherein heat losses due to conduction are minimized.

11. The apparatus according to claim 2 further comprising an aperture in one of said walls for allowing access to said compartment, said insulation material being of the foam type which can be injected into said compartment via said aperture as a liquid that solidifies to form a relatively rigid insulating material.

12. The apparatus according to claim 5 wherein said end is joined to the opposing wall such that a smooth contour of said outer surface adjacent said end is maintained wherein said outer surface presents a food receiving surface which will not trap food.

13. The apparatus according to claim 2 wherein at least three reinforcing posts are provided in a geometric configuration which reinforces the planar orientation of one wall relative to the other wall.

FIG.1

FIG.2

FIG.3

FIG.4

FIG.5

FIG.6

FIG.7

0081279

European Patent
Office

# EUROPEAN SEARCH REPORT

Application number

## DOCUMENTS CONSIDERED TO BE RELEVANT

EP 82304199.1

| Category | Citation of document with indication, where appropriate, of relevant passages | Relevant to claim | CLASSIFICATION OF THE APPLICATION (Int. Cl. 3) |
|---|---|---|---|
| Y | <u>US - A - 3 684 123</u> (BRIDGES) | 1 | B 65 D 85/72 |
| A | * Fig. 2; column 2, lines 18-24 * | 7 | B 65 D 25/18 |
| | -- | | B 65 D 6/10 |
| Y | <u>US - A - 3 516 567</u> (HEMPHILL) | 1 | |
| A | * Fig. 3,4; Numeral 8' * | 6,7 | |
| | -- | | |
| A | <u>US - A - 3 182 842</u> (HUG) | 1,7 | |
| | * Totality, especially fig. 1 * | | |
| | ---- | | |

|  |
|---|
| TECHNICAL FIELDS SEARCHED (Int. Cl. 3) |
| B 65 D 1/00 |
| B 65 D 6/00 |
| B 65 D 21/00 |
| B 65 D 23/00 |
| B 65 D 25/00 |
| B 65 D 81/00 |
| B 65 D 85/00 |
| A 47 J 41/00 |
| A 47 J 47/00 |

The present search report has been drawn up for all claims

| Place of search | Date of completion of the search | Examiner |
|---|---|---|
| VIENNA | 25-02-1983 | CZUBA |